# EUROPÄISCHE PATENTANMELDUNG

(11) **EP 2 384 946 A2**
(43) Veröffentlichungstag der Anmeldung: **09.11.2011**
(21) Anmeldenummer: 11003114.3
(22) Anmeldetag: 13.04.2011
(51) Int. Cl.: B60W 40/08, B60W 50/00

(54) **Kontakterkennung zwischen Bediener und Steuervorrichtung**

(30) Priorität: 03.05.2010 DE 102010019236
(71) Anmelder: Deutsches Zentrum für Luft- und Raumfahrt e. V., 51147 Köln (DE)
(72) Erfinder: Abildgaard, Max, 38108 Braunschweig (DE); Lantzsch, Robin, 10247 Berlin (DE); Müllhäuser, Mario, 38106 Braunschweig (DE)
(74) Vertreter: Aisch, Sebastian

(57) **Zusammenfassung**

Die Erfindung betrifft ein Verfahren zur Detektion eines Kontaktzustandes zwischen mindestens einem Fahrzeugführer eines Fahrzeuges und einer zur Steuerung des Fahrzeuges eingerichteten Steuereingabevorrichtung, bei dem aus von Sensoren (4a,4b) erfassten Bewegungssignalen der Steuereingabevorrichtung (1) ein Frequenzspektrum ermittelt wird, anhand dessen dann der Kontaktzustand zwischen der Steuereingabevorrichtung und dem Fahrzeugführer detektiert wird.

## Beschreibung

Die Erfindung betrifft ein Verfahren zur Detektion eines Kontaktszustandes zwischen mindestens einem Fahrzeugführer eines Fahrzeuges und einer zur Steuerung dieses Fahrzeuges eingerichteten Steuereingabevorrichtung. Die Erfindung betrifft auch eine Steuereingabevorrichtung hierzu.

Die momentan in der Entwicklung befindlichen aktiven Steuerorgane für Fahrzeuge, insbesondere für Luftfahrzeuge, auch aktive Sidesticks genannt, weisen gegenüber den herkömmlichen Steuerorganen den Vorteil auf, dass entsprechende Steuerkräfte künstlich durch Aktuatoren auf die Steuereingabevorrichtung aufgebracht werden können, um so dem Fahrzeugführer des Fahrzeuges ein reelleres Steuergefühl vermitteln zu können. Der Bediener beziehungsweise Fahrzeugführer bekommt somit das Gefühl, dass die Steuereingabevorrichtung tatsächlich mechanische Elemente, wie zum Beispiel Feder, Masse, Dämpfer oder Reibungsbremsen enthalten und mechanisch mit den Steuerungselementen des Fahrzeuges, wie beispielsweise Höhen oder Seitenruder, verbunden sind.

Solche aktiven Steuerorgane können aber auch dazu eingesetzt werden, dem Bediener beziehungsweise Fahrzeugführer taktile Hinweise zu übermitteln, um so einen weiteren Informationskanal zur Verfügung zu stellen. Solche derartigen taktilen Hinweise können dabei unterschiedlich dargestellt werden, etwa durch Vibration für ungerichtete Informationen oder durch lokale Kraftvariationen für gerichtete Informationen. Eine lokale Kraftvariation in Form eines sogenannten Softstops beispielsweise bewirkt, dass sich der Federkraftgradient ab einer bestimmten Position merklich vergrößert, so dass der Bediener beziehungsweise Fahrzeugführer auf haptischen Wege über das Erreichen eines beliebigen, vom Steuerweg abhängigen Limits informiert werden kann. Solche Hinweise werden auch "tactile cues" genannt. Die Entscheidung, einem solchen "tactile cue" zu folgen oder es zu übersteuern, bleibt dabei dem Bediener beziehungsweise Fahrzeugführer überlassen.

Ein großes Problem bei dieser Art der Informationsübertragung stellt dabei den Fakt dar, dass für eine Informationsübertragung auf diesem Informationskanal der Bediener beziehungsweise Fahrzeugführer mit der Steuereingabevorrichtung in Kontakt stehen muss, damit die taktilen Hinweise, die auf die Steuereingabevorrichtung aufgebracht werden, vom Fahrzeugführer wahrgenommen werden können. Erfolgt beispielsweise die Steuerung des Fahrzeuges mittels einer Hand-Steuereingabevorrichtung (Sidestick, Joystick), so muss der Fahrzeugführer die Steuereingabevorrichtung mit der Hand umfassen, um die Informationen wahrnehmen zu können. Würde er loslassen, würde das Steuer dem Kraftgradienten des "tactile cues", vom Fahrzeugführer unbemerkt, folgen, was wiederum dazu führt, dass das Fahrzeug der aufgebrachten Steuerbewegung folgt. Dabei sei darauf hingewiesen, dass die aufgebrachte Kraft auf das Steuerorgan keine eigentliche Steuerbewegung des Fahrzeuges darstellen soll, sondern lediglich dazu dienen soll, dem Fahrzeugführer eine Information zu übermitteln. Dass das Fahrzeug aufgrund des "tactile cues" eine Steuerbewegung vollzieht, würde der Fahrzeugführer erst dann bemerken, wenn die Bewegungsabweichung größer als seine Wahrnehmungsschwelle ist, was zu äußerst gefährlichen Situationen führen kann.

Es ist daher bei dieser Art von Steuereingabevorrichtungen von entscheidender Bedeutung, dass eine Information für den Fahrzeugführer erst dann auf das Steuerorgan beaufschlagt wird, wenn die Steuereingabevorrichtung sicher festgestellt hat, dass der Fahrzeugführer mit der Steuereingabevorrichtung des Fahrzeuges in Kontakt steht, beispielsweise mit der Hand umfasst.

Eine weitere Applikation, die das Detektieren eines Kontaktzustandes notwendig macht, ist die Stabilisierung der Steuereingabevorrichtung selbst. Denn die Steuereingabevorrichtung ist Beschleunigungen ausgesetzt, die beispielsweise aus der Erdbeschleunigung, der Bewegung des Luftfahrzeuges oder Vibrationen stammen. Die Steuersensorik der Steuereingabevorrichtung kann diese Trägheitskräfte nicht von den gewollten Kräften des Fahrzeugführers unterscheiden, wodurch es zu ungewollten Steuereingaben kommen kann. Eine Steuerkontakterkennung kann innerhalb der Regelung des Steuers dazu genutzt werden, dass es sich nur verstellen lässt, wenn sich eine Hand am Steuer befindet.

### Stand der Technik

Aus der DE 10 2007 039 332 A1 ist ein Verfahren und Lenkassistenz zur Detektion des Kontaktzustandes von mindestens einer Hand eines Fahrers an der Lenkhandhabe eines Fahrzeuges bekannt. Bei dem Verfahren wird der Kontaktzustand der Hand am Lenkrad über einen Vergleich der gemessenen Sensordaten eines Moment- und eines Winkelsensors mit einem Modell der freien Lenkbewegung detektiert, was über einen sogenannten Zustandsbeobachter erfolgt. Der Zustandsbeobachter schätzt dabei die Fahrerlenkmomente ab und ermittelt daraus, ob sich die Hände an der Lenkhandhabe befinden. Nachteilig dabei ist, dass eine genaue Modellierung der Mechanik der Lenkung erforderlich wird, wobei der Zustandsbeobachter letztlich nur eine Schätzung abgeben kann und eine solche Schätzung im Flugbetrieb für eine sichere Handsteuererkennung nicht ausreichen würde.

Des Weiteren ist aus der DE 10 2008 021 150 A1 ein Verfahren bekannt, bei dem eine fehlende Fahreraktivität über einen bestimmten Zeitraum ermittelt wird, woraus sich indirekt dann die Wahrscheinlichkeit eines Kontaktes mit der Lenkhandhabe bestimmen lässt. Dabei wird über einen bestimmten Zeitraum hinweg die Lenkaktivität ermittelt und abgespeichert, wobei somit auch bestimmt werden kann, wenn über einen bestimmten Zeitraum keine Lenkaktivitäten detektiert wurden. Über einen Schwellwert kann dann bestimmt werden, ab welcher Zeit der Inaktivität von einem fehlenden Kontakt ausgegangen werden kann. Auch dieses Verfahren hat den Nachteil, dass es nicht exakt ermitteln kann, ob ein Kontakt zwischen dem Fahrzeugführer und Steuereingabevorrichtung vorhanden ist. Darüber hinaus kann dieses Verfahren nicht bestimmen, ob es sich um eine beabsichtigte, manuelle oder unbeabsichtigte, das heißt durch Beschleunigung hervorgerufene Steuerwinkeländerung handelt, da lediglich auf die Fahrerinaktivität abgestellt wird.

Ein weiteres Verfahren, das sich auf die Analyse von Fahreraktivitäten bezieht, ist aus der DE 103 58 494 A1 bekannt, bei dem das Fahrer-1st-Verhalten in einer bestimmten Situation mit einem vorgegebenen Referenz-Fahrverhalten verglichen wird. Wird erkannt, dass das Ist-Verhalten des Fahrers von dem Referenzverhalten, das in einer Datenbank abgespeichert ist, in dieser Situation, beispielsweise bei sehr hoher Geschwindigkeit, stark abweicht, so schaltet sich das Fahrerassistenzsystem dazwischen und verhindert so schwerwiegende Unfälle. Auch hier kann lediglich auf fehlende Fahreraktivität geschlossen werden, jedoch nicht darauf, ob tatsächlich ein physischer Kontakt zwischen Steuereingabevorrichtung und Fahrer existiert.

Die aus dem Stand der Technik bekannten Verfahren haben allesamt für den vorliegenden Aufgabenbereich den Nachteil, dass sie nicht mit hinreichender Genauigkeit einen tatsächlichen physischen Kontakt zwischen Steuereingabevorrichtung und Fahrzeugführer erkennen lassen, der jedoch insbesondere im Flugbetrieb notwendig ist. Ohne eine solche hinreichende genaue "Hands-on" Detektion lassen sich aktive Steuereingabevorrichtungen in Luftfahrzeugen nicht sicher betreiben.

### Aufgabe

Mit Blick auf das vorangegangene ist es daher Aufgabe der vorliegenden Erfindung, ein Verfahren anzugeben, das sicher einen Kontakt zwischen dem Fahrzeugführer und der für das Fahrzeug zur Steuerung vorgesehenen Steuereingabevorrichtung detektiert.

### Lösung

Die Aufgabe wird mit dem Verfahren der eingangs genannten Art erfindungsgemäß gelöst durch
- Ermitteln eines Frequenzspektrums anhand von Sensoren erfassten Bewegungssignalen der Steuereingabevorrichtung über die Zeit und
- Detektieren des Kontaktzustandes in Abhängigkeit des ermittelten Spektrums.

Die Steuereingabevorrichtung, wie beispielsweise ein Sidestick, weist dementsprechend Sensoren auf, welche die Bewegung des Steuerorgans detektieren. Diese Bewegungssignale werden in der Regel zur Steuerung des Fahrzeuges verwendet, wie dies beispielsweise im "fly-by-wire" Betrieb erfolgt. Dabei wurde erkannt, dass anhand des Frequenzspektrums dieser Bewegungssignale ermittelt werden kann, ob der Fahrzeugführer beziehungsweise Bediener physischen Kontakt mit der Steuereingabevorrichtung hält. Daher ermittelt die Steuereingabevorrichtung anhand dieser detektierten Bewegungssignale das entsprechende Frequenzspektrum, wobei anhand dieses Frequenzspektrums dann erkannt werden kann, ob der Fahrzeugführer mit der Steuereingabevorrichtung in Kontakt steht oder nicht.

Dem liegt das Prinzip zugrunde, dass der Bediener, wenn er die Steuereingabevorrichtung beispielsweise mit der Hand umfasst, das System des aktiven Steuers der Art verändert, dass sich ein neues mechanischen Gesamtsystem ergibt, da die Mechanik des Steuers zusammen mit der Masse der Hand und des Armes sowie der Elastizität der Haut und des Gewebes, der Muskeln und der Gelenke das Gesamtsystem verändert. Aufgrund dieses neuen mechanischen Gesamtsystems verändert sich auch das Schwingungsverhalten naturgemäß, so dass sich die Frequenzspektren des ungegriffenen Steuers mit dem des gegriffenen Steuers charakteristisch unterscheiden, worauf sicher auf einen Kontakt zwischen Hand und Steuer geschlossen werden kann. Der Unterschied zwischen "hands-on" und "hands off" ist in den Spektren der gemessenen Sensorsignale sichtbar.

Bei den Sensoren kann es sich dabei um sogenannte Stellungssensoren handeln, welche die Bewegungssignale der Steuereingabevorrichtung über die Zeit erfassen. Solche Stellungssensoren können insbesondere Winkel- und/oder Positionssensoren sein, aber auch Kraftsensoren sein, welche den entsprechenden aufgebrachten Kraftgradienten des Bedieners ermitteln. Auch Beschleunigungssensoren können dabei zum Einsatz kommen.

Ganz besonders vorteilhaft ist es, wenn aus dem ermittelten Frequenzbereich der Bewegungssignale bestimmte Frequenzbereich gefiltert wird, und nur anhand der gefilterten Frequenzbereiche eine "hands-on" Detektion erfolgt. So wurde beispielsweise erkannt, dass in höheren Frequenzbereichen charakteristische Vibrationen erkennbar sind, die sich aus Vibrationen aus der Umgebung des Steuers zusammensetzen. Wird das Steuer nun von dem Fahrzeugführer gegriffen, so verändern sich diese Frequenzen entsprechend, was dann detektierbar ist.

Vorteilhafterweise kann die Detektion anhand eines Vergleiches zwischen einem ermittelten Referenz-Frequenzspektrums mit dem ermittelten Frequenzspektrum erfolgen. Dies ist deshalb besonders vorteilhaft, da sich das Frequenzspektrum, welches sich ergibt, wenn der Fahrer die Hand nicht am Steuer hat, von Fahrzeug zu Fahrzeug aufgrund des unterschiedlichen Fahrzeugaufbaus von Fahrzeug zu Fahrzeug unterscheiden.

Ganz besonders vorteilhaft ist es, wenn Vibrationen in der Umgebung der Steuereingabevorrichtung mittels Sensoren erfasst werden und zu Detektion des Kontaktzustands anhand des ermittelten Frequenzspektrums herangezogen werden. Diese Vibrationen in der Umgebung der Steuereingabevorrichtung ergeben sich aus der Bewegung des Fahrzeuges selbst, wie beispielsweise eines Hubschraubers, der stark vibriert. Umfasst der Fahrzeugführer das Steuer nicht, so werden diese Vibrationen auf das Steuer ungewollt übertragen, was sich anhand der Sensoren detektieren lässt. In dem ermittelten Frequenzspektrum finden sich dann diese Vibrationen nahezu identisch wieder. Umfasst der Fahrzeugführer jedoch das Steuer, so wird aufgrund des neuen mechanischen Gesamtsystems und der veränderten Dämpfungseigenschaften diese Vibration zum Teil geschluckt, so dass sich anhand dieser Veränderung ein Kontaktzustand detektieren lässt.

Des Weiteren wurde erkannt, dass aufgrund der Veränderung des Frequenzspektrums sich auch die Griffstärke erkennen lässt, da mit zunehmender Griffstärke sich auch das Frequenzspektrum verändert. Es ist daher ganz besonders vorteilhaft, wenn anhand des ermittelten Frequenzspektrums auch zusätzlich die Griffstärke bei einem Hand-Steuerkontakt erkennen lässt.

Darüber hinaus wird die Aufgabe auch mit einer Steuereingabevorrichtung zur Steuerung eines Fahrzeuges gelöst. Die Steuereingabevorrichtung enthält Sensoren zur Erfassung von Bewegungssignalen der Steuereingabevorrichtung, wobei mit Hilfe einer Recheneinheit aus den erfassten Bewegungssignalen das Frequenzspektrum ermittelt wird, woraus sich dann der Kontaktzustand in Abhängigkeit des ermittelten Frequenzspektrums ermitteln lässt.

### Ausführungsbeispiele

Die vorliegende Erfindung wird anhand der beigefügten Zeichnungen beispielhaft näher erläutert. Es zeigen:
- Figur 1: - schematische Darstellung einer Steuereingabevorrichtung basierend auf dem erfindungsgemäßen Verfahren;
- Figur 2: - schematische Darstellung zweier Frequenzspektren.

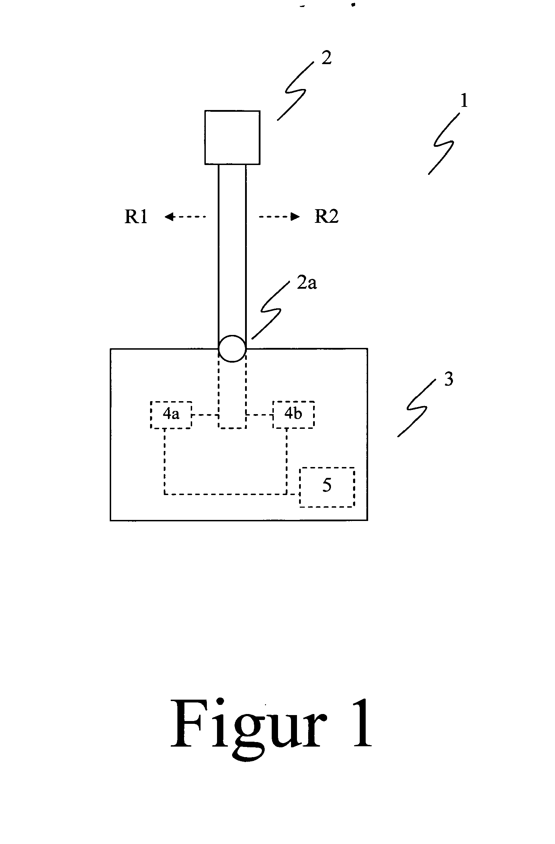

Figur 1 zeigt schematisch eine Steuereingabevorrichtung 1 bestehend aus einem Steuerstick 2 und einer Mechanik 3. Beispielhaft sei angenommen, dass der Steuerstick 2 um die Aufhängung 2a in die beiden Richtungen R1 und R2 schwenkbar ist. Die Schwenkrichtungen sind dabei mit den beiden Pfeilen gekennzeichnet.

In der Mechanik 3 befinden sich entsprechende Sensoren 4a, 4b, welche die Bewegungssignale in den Schwenkrichtungen R1 und R2 sehr genau ermitteln. Die Sensoren 4a, 4b können dabei beispielsweise Winkel- oder Positionssensoren sein, welche einen bestimmten Ausschlag des Steuersticks 2 in eine der Schwenkrichtungen R1 oder R2 detektieren. Die von den Sensoren 4a, 4b ermittelten Bewegungssignale werden dann an eine Verarbeitungseinheit 5 weitergeleitet, die dann aus den ermittelten Bewegungssignalen das Frequenzspektrum ermittelt, anhand dessen dann der Kontaktzustand ermittelt wird. Diese Analyse des Frequenzspektrums kann ebenfalls in der Verarbeitungseinheit 5 erfolgen.

Wie bereits oben erwähnt, verändert sich durch den Kontakt des Fahrzeugführers mit der Steuereingabevorrichtung 1 das Frequenzspektrum, so dass aufgrund dieser Analyse in der Verarbeitungseinheit 5 entsprechend sicher festgestellt werden kann, ob der Fahrzeugführer mit der Steuereingabevorrichtung 1 in Kontakt steht.

Solch eine Steuereingabevorrichtung kann beispielsweise zur Steuerung eines Hubschraubers eingesetzt werden, bei dem mit Hilfe des aktiven Sidesticks 2 die Steuerung der kollektiven Blattanstellwinkel durchgefügt wird. Über die kollektiven Blattwinkelverstellungen wird, in Abhängigkeit vom Flugzustand, die Leistung des Hubschraubers gesteuert. Auf der Basis des aktiven Sidesticks 2 kann dann eine taktile Funktion zur Einhaltung des Leistungslimits implementiert werden, um so dem Piloten einen weiteren Informationskanal zwischen der Mensch-Maschine-Schnittstelle zur Verfügung zu stellen. Wenn das Limit erreicht wird, generiert der aktive Sidestick eine Kraft nach unten, das heißt in Richtung geringerer Leistung, bis die aktuell kommandierte Leistung geringer als die zulässige Leistung ist. Der Pilot spürt diese Kraft am Steuer und folgt ihr.

Angenommen, der Pilot nimmt seine Hand vom Steuer, während sich der Hubschrauber in einem Flugzustand nahe des Leistungslimits befindet, so dass ihm der taktile Informationskanal nicht zur Verfügung steht. Wenn es in dieser Situation aufgrund äußerer Störungen dazu kommt, dass sich die Momentanleistung erhöht, dann würden die taktilen Funktionen eine Kraft erzeugen, die versuchen, das Steuer nach unten zu bewegen. Da der Pilot seine Hand nicht am Steuer hat, kann er dies zum einen nicht verhindern und zum anderen merkt er dies erst dann, wenn der Hubschrauber auf die ungewollte Steuereingabe reagiert. Der Pilot ist "out-off-the-loop", was je nach Flugsituation sehr gefährlich werden kann. Durch die Detektion des Handkontaktes zwischen der Steuereingabevorrichtung und des Piloten kann dies verhindert werden, so dass der Pilot das volle Situationsbewusstsein behält.

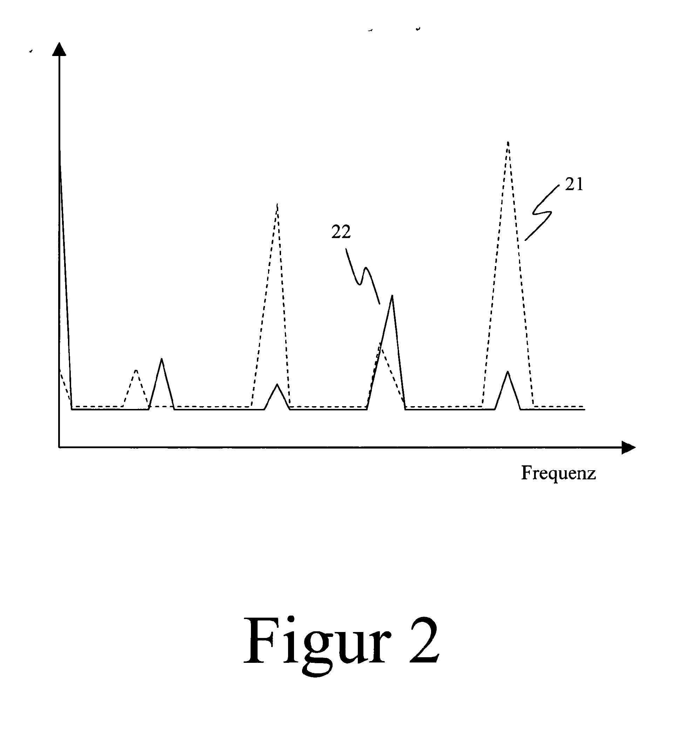

Figur 2 zeigt schematisch zwei Leistungsspektren 21 und 22, wie sie von der Verarbeitungseinheit 5 aus Figur 1 ermittelt werden. Wie im Frequenzspektrum 21 erkennbar ist, befinden sich in den Frequenzen große Amplitudenausschläge, die darauf hindeuten, dass der Fahrzeugführer keinen Kontakt mit der Steuereingabevorrichtung hat. Erst wenn der Fahrzeugführer den Steuerstick mit seiner Hand umfasst, so dass sich ein neues Gesamtsystem und somit eine veränderte Mechanik ergibt, verändert sich auch das Leistungs- beziehungsweise Frequenzspektrum in Richtung des dargestellten Spektrums 22, bei dem die Frequenzen nur noch wenig Leistung aufweisen. Dies liegt letztlich daran, dass durch dieses so veränderte mechanische Gesamtsystem bestehend aus Steuerstick und dem Piloten die Dämpfungseigenschaften stark verändert wurden, so dass die Frequenzen insbesondere durch die Physiologie des Menschen gedämpft werden. Dies lässt sich dann letztendlich anhand des so veränderten Frequenzspektrums erkennen.

Ein großer Vorteil bei diesem Verfahren liegt insbesondere auch darin, dass dieses Verfahren in nahezu allen Steuerelementen nachgerüstet werden kann, die mit solchen Bewegungssensoren ausgerüstet sind. Es kann somit auf die bereits vorhandenen Sensoren zurückgegriffen werden, ohne teure und aufwendige Umbaumaßnahmen durchführen zu müssen. Des Weiteren bietet dieses Verfahren aufgrund der unverkennbaren Charakteristik der Frequenzspektren eine sichere Möglichkeit, den Kontaktzustand zwischen Steuereingabevorrichtung und dem Fahrzeugführer zu erkennen.

## Patentansprüche

1. Verfahren zur Detektion eines Kontaktzustandes zwischen mindestens einem Fahrzeugführer eines Fahrzeuges und einer zur Steuerung dieses Fahrzeuges eingerichteten Steuereingabevorrichtung (1), **gekennzeichnet durch**
- Ermitteln eines Frequenzspektrums (21, 22) anhand von Sensoren (4a, 4b) erfassten Bewegungssignalen der Steuereingabevorrichtung (1) über die Zeit, und
- Detektieren des Kontaktzustandes in Abhängigkeit des ermittelten Frequenzspektrums (21, 22).

2. Verfahren nach Anspruch 1, **gekennzeichnet durch** Stellungssensoren (4a, 4b), insbesondere Winkel- und/oder Positionssensoren, Kraftsensoren und/oder Beschleunigungssensoren als zur Erfassung der Bewegungssignale der Steuereingabevorrichtung (1) vorgesehenen Sensoren.

3. Verfahren nach Anspruch 1 oder 2, **gekennzeichnet durch** Filterung eines Frequenzbereiches des ermittelten Frequenzspektrums (21, 22) und Detektieren des Kontaktzustands in Abhängigkeit des gefilterten Frequenzbereiches des Frequenzspektrums (21, 22).

4. Verfahren nach einem der vorhergehenden Ansprüche, **gekennzeichnet durch** Detektieren des Kontaktzustandes in Abhängigkeit eines Vergleiches zwischen dem ermittelten Frequenzspektrums und einem hinterlegten, Referenz-Frequenzspektrum.

5. Verfahren nach einem der vorhergehenden Ansprüche, **gekennzeichnet durch** Erfassen von Fahrzeug-Vibrationen mittels Sensoren in der Umgebung der Steuereingabevorrichtung (1) und Detektieren des Kontaktzustandes weiterhin in Abhängigkeit der erfassten Vibrationen.

6. Verfahren nach einem der vorhergehenden Ansprüche, **gekennzeichnet durch** Ermitteln einer Kontaktstärke, insbesondere einer Hand-Steuer-Kontaktstärke, in Abhängigkeit des ermittelten Frequenzspektrums (21, 22).

7. Verfahren nach einem der vorhergehenden Ansprüche, **gekennzeichnet durch** Detektion eines Kontaktzustandes zwischen mindestens einer Hand des Fahrzeugführers und der Steuereingabevorrichtung (1).

8. Steuereingabevorrichtung (1) zur Steuerung eines Fahrzeuges mit Sensoren (4a, 4b) zur Erfassung von Bewegungssignalen der Steuereingabevorrichtung (1), wobei die Steuereingabevorrichtung (1) zur Durchführung des Verfahrens nach einem oder mehreren der vorhergehenden Ansprüche eingerichtet ist.

9. Steuereingabevorrichtung (1) nach Anspruch 8, **dadurch gekennzeichnet, dass** die Steuereingabevorrichtung (1) einen Sidestick (2) zur Steuerung eines Luftfahrzeuges ist.

10. Steuereingabevorrichtung (1) nach Anspruch 8 oder 9, **dadurch gekennzeichnet, dass** die Steuereingabevorrichtung (1) mit mindestens einem zur Erfassung von Fahrzeug-Vibrationen in der Umgebung der Steuereingabevorrichtung (1) eingerichteten Sensor verbunden ist.
